# EUROPEAN PATENT APPLICATION

(11) **EP 2 950 351 A1**
(43) Date of publication of application: **02.12.2015**
(21) Application number: 14170089.8
(22) Date of filing: 27.05.2014
(51) Int. Cl.: H01L 31/04, H02S 40/44

(54) **Solar energy conversion system and apparatus for use therewith**

(71) Applicant: Fehr, Beat, 4126 Bettingen (CH)
(72) Inventor: Fehr, Beat, 4126 Bettingen (CH)
(74) Representative: Bohest AG

(57) **Abstract**

The solar energy conversion system comprises a thermal solar collector (1) and a photovoltaic collector (12). The system further comprises a mounting installation for removably mounting the photovoltaic collector relative to the thermal solar collector such that in a removed position (20) of the photovoltaic collector, the thermal solar collector (1) is not covered, and such that in a mounted position of the photovoltaic collector (12), the thermal solar collector (1) is at least partially covered from impinging solar radiation by the photovoltaic collector. The invention also comprises an apparatus for use in the solar energy conversion system.

## Description

The invention relates to a solar energy conversion system comprising a thermal solar collector and a photovoltaic collector. Especially, the invention refers to such a system for optimized use of solar energy.

Systems are known, where a photovoltaic collector is combined with a thermal solar collector. These systems are used for producing electric energy and for making use of the high energy efficiency of thermal collectors to produce heat for heating purposes or for the production of warm water.

The heat produced in thermal solar collectors and the cooling of photovoltaic collectors for them to work efficiently are often contradictory requirements. Therefore, in DE 10 2010 019 158 it is suggested to arrange two separate photovoltaic collectors above each other and above a separate thermal solar collector. One of the photovoltaic collectors is relatively moveable to the second photovoltaic collector. In an overlapping mode, one photovoltaic collector entirely covers the other photovoltaic collector but allows parts of the thermal solar collector to be directly accessible for solar radiation. By moving the other photovoltaic collector the accessible area of the thermal solar collector is reduced until the entire thermal solar collector is covered. At the same time this photovoltaic collector becomes accessible to solar radiation as well. Thus, limited or no further heat is produced in the thermal solar collector and additional electric energy is produced in the additional surface provided by the photovoltaic collector.

However, the thermal solar collector disclosed in DE 20 2010 019 158 is never entirely accessible for solar radiation. Thus, large parts of the thermal solar collector may not be used for heat production. This may especially be a disadvantage in winter or in transitional seasons where extensive heating is required.

Thus, there is need for a solar energy conversion system comprising a thermal solar collector and a photovoltaic collector, the system not having disadvantages of prior art systems. Especially, there is need for such a system that provides optimal use of solar energy.

According to an aspect of the invention, there is provided a solar energy conversion system for optimized use of solar energy. The system comprises a thermal solar collector and a photovoltaic collector. The system further comprises a mounting installation for removably mounting the photovoltaic collector relative to the thermal solar collector such that in a removed position of the photovoltaic collector, the thermal solar collector is not covered, and such that in a mounted position of the photovoltaic collector, the thermal solar collector is at least partially covered from impinging solar radiation by the photovoltaic collector.

With the system according to the invention an existing thermal solar collector may entirely be used for heat production in times when it is needed. For example, in winter or in transitional seasons, such as spring and autumn, large amount of heat is required. However, in summer, additional heat is not required or may even be a hindrance or critical in view of overheating the thermal solar collector. By covering the thermal solar collector with a photovoltaic collector the production of heat may be limited or stopped. At the same time electric energy is produced in the photovoltaic collector, which electric energy may, for example, be used for cooling. By a partial covering of the thermal solar collector, a minimum amount of heat production is still available, for example for the production of hot water, while the remaining area of the thermal solar collector may be used for electric energy production.

The system according to the invention is favorable, since an existing space may be optimized for solar energy production. Space in inhabited areas is often limited, especially space for the provision of solar collectors. Thus, by the covering and non-covering of the thermal solar collector, maximum heat production is achieved by making use of the high efficiency of thermal solar collectors for heat production and using an entire surface of the thermal solar collector when needed. In addition, in times when less heat is required, the same area that is otherwise used for heat production may be used to a variable extent for electric energy production.

In a basic variant of the system according to the invention, a photovoltaic collector may be mounted to lie above a thermal solar collector such as to cover the thermal collector entirely or only partially. When heat production is required, the photovoltaic collector may be removed again. If a frame is mounted next to a thermal collector, a photovoltaic collector may for example be slidably inserted into the frame and mounted for example at various positions above the thermal solar collector. When not needed, the photovoltaic collector may be removed again from the frame. Preferably, the photovoltaic collector is permanently provided, for example on a roof. This is favorable, since a repeated installing and removing of the photovoltaic collector may be omitted.

According to an aspect of the system according to the invention, the thermal solar collector is mounted in a stationary manner and the photovoltaic collector is mounted in a movable manner such as for the photovoltaic collector to be relatively moveable against the thermal solar collector. Preferably, such a relative movement is done automatically, for example by appropriate moving and actuation mechanisms. These may for example be motors, mechanic or hydraulic means as known in the art. A relative movement may be continuously or stepwise and may include a plurality of mounted positions of the photovoltaic collector relative to the thermal solar collector.

According to another aspect of the system according to the invention, the photovoltaic collector in the mounted position is arranged above the thermal solar collector and covers the thermal solar collector in a range between about 50 percent to 100 percent, preferably in a range between about 70 percent to 100 percent, for example 80 percent. It may be favorable, to not entirely cover the solar thermal collector in order to have heat production to a variable extent in parallel to electric energy production. However, if heat production shall be suppressed to a maximum extent or if the thermal collector shall be protected from further solar radiation and excess heating, then the photovoltaic collector may entirely cover the thermal solar collector.

According to an aspect of the system according to the invention, the mounting installation comprises a guiding device such that the photovoltaic collector is linearly moveable relative to the thermal solar collector along a guiding direction defined by the guiding device. Photovoltaic collector and thermal solar collector may be mounted in planes parallel to each other. Through the linear movement, for example by guiding rails, both collectors may be arranged substantially parallel to a mounting surface, for example a roof surface. Preferably, a slope of a roof may be used in assisting the displacement of the photovoltaic solar collector. For example, gravitational force may assist in a lowering of a photovoltaic collector, while the slope of the roof may assist a guiding direction of the photovoltaic collector. With a linear displacement, photovoltaic collector and thermal collector may essentially be arranged in a same plane or in planes parallel to each other. This may simplify a mounting installation and a moving mechanism. This may also be favorable in view of fulfilling specifications given by regulations for example of monument conservation authorities or for a building and installation to fit harmoniously into the landscape and sites of local character.

According to another aspect of the system according to the invention, the mounting installation comprises a hinge and the photovoltaic collector is pivotably moveable around an axes of the hinge and pivotably movable relative to the thermal solar collector. By the provision of a hinge the photovoltaic collector may be rotatably moved relative to the thermal solar collector. In the removed position, the photovoltaic collector is flipped open to a maximum extent, preferably such that solar radiation is incident onto the entire thermal solar collector. A rotation angle of the photovoltaic collector may be between 0 degree and 180 degree. An opening angle, where the photovoltaic collector is in the removed position, is dependent on many parameters, for example on the position of the sun, on the mounting position (distance) from the thermal solar collector and on a tilting of a surface the collectors are mounted. Thus, an opening or rotation angle may be adapted accordingly. In middle European latitudes, an opening angle in the removed position may for example be between 45 degree and 100 degree, for example 50 to 80 degree. Preferably, the rotation angle is measured relative to the plane of the thermal solar collector or relative to a mounting surface of the photovoltaic collector. Preferably, in the removed position, solar radiation is allowed to impinge onto the entire surface of the thermal solar collector without being shadowed by the photovoltaic collector. Preferably, the rotation angle may be varied such that the thermal solar collector is shadowed by the photovoltaic collector by various extent. Preferably, the rotation angle is continuously variable. However, a rotation angle may also be set stepwise such that the photovoltaic collector may be mounted in several discrete mounting positions.

The photovoltaic collector may comprise a reflector arranged on a reverse side of the photovoltaic collector. Such a reflector is for reflecting solar radiation onto the thermal solar collector when the photovoltaic collector is not entirely covering the thermal solar collector (the photovoltaic collector is in an 'open' position). When the photovoltaic collector is mounted including a rotation angle of more than 0 degree relative to the thermal solar collector, the reflector may deflect solar radiation impinging on the reverse side of the photovoltaic collector. By this, additional solar radiation may be used for thermal heating in the thermal solar collector. In addition, the photovoltaic collector may be arranged such as to receive some or further solar radiation as when being in the removed position (maximum opening position) to produce (more) electric energy. By the provision of a reflector on the reverse side of the photovoltaic collector the overall efficiency of the solar system according to the invention may further be enhanced. A reflector may cover substantially the entire revers side of the photovoltaic collector or may also cover only part of the reverse side of the photovoltaic collector.

According to a further aspect of the system according to the invention, the system comprises a control unit for detecting any one of ambient conditions and solar thermal collector parameters. Ambient conditions may for example be temperature, wind conditions and incident angle of solar radiation. Solar thermal collector parameters may for example be temperature or an amount of produced heat. Accordingly, the system may be provided with sensors for measuring ambient conditions or solar thermal collector parameters, for example with anemometers, thermometers, fluid flow meters or may make use of data provided by already available sensors. In the latter case measured data may be sent to the control unit for further processing. Also stored data may be used in the control unit for an optimized use of solar energy. Stored data may for example also be data on the position and movement of the sun. Received data may for example also be weather forecast data, for example on upcoming thunderstorms. According to the data received or processed in the control unit, the system according to the invention may be operated. Thus, a solar thermal panel may be covered or uncovered or more or less covered.

According to an aspect of the system according to the invention, the mounting installation comprises a moving mechanism such as to position the photovoltaic collector from the removed position to the mounted position and vice versa, and wherein the control unit is configured for actuating the moving mechanism if a detected ambient condition exceeds or falls short of a preset ambient parameter or if a detected solar thermal collector parameter exceeds a preset solar thermal collector parameter. By the moving mechanism, the photovoltaic collector may preferably automatically be arranged in a position for optimized heat or electric energy production or both. That is, the photovoltaic collector is moved to the removed or mounted position or - if applicable - closer to one of said positions.

System parameters may be set according to which the position of the photovoltaic collector shall be varied if said preset parameters are exceeded or are fallen short of. Such a parameter may for example be a maximum temperature that the thermal solar collector may reach or a maximum heat already produced by the thermal solar collector. If the parameter is exceeded, the moving mechanism is actuated and the photovoltaic collector is repositioned to cover or partly cover the thermal solar collector. A parameter may for example also be a maximum wind velocity or impacting force by which a photovoltaic collector extending from, for example, the surface of a roof or the mounting installation might get damaged. If a measured wind velocity or force acting on the photovoltaic collector exceeds a certain preset value, the photovoltaic collector - if in the removed position or in a mounted position with a rotation angle larger than a certain degree, the photovoltaic collector may be moved to lie close to the roof for safety reasons. A preset parameter may for example also be a minimum temperature or minimum heat production of the thermal solar collector. If a measured temperature of heat produced per time falls below a preset minimum temperature or preset minimum heat production, the moving mechanism may be actuated to reposition the photovoltaic collector to entirely uncover or further uncover the thermal solar collector.

According to an aspect of the system according to the invention, the thermal solar collector, the mounting installation and the photovoltaic collector are mounted permanently on a roof, preferably on a roof of a building, such as for example a house. Especially, in inhabited buildings, there is a requirement for heat as well as for electric power. In addition, the space on roofs is limited such that the space available should optimally be used and be adaptable to a user's needs.

According to yet another aspect of the system according to the invention, the system further comprises another photovoltaic collector arranged in a sideways manner and next to the thermal solar collector. Therein, the other photovoltaic collector is not covered when the photovoltaic collector is in the mounted position. However, the other photovoltaic collector is preferably entirely covered by the photovoltaic collector in the removed position of the photovoltaic collector. In such systems, with an additional permanently installed photovoltaic collector, there is a permanent production of electrical energy (provided that solar radiation is available). Production of electrical energy may be enhanced, for example doubled. Depending on the arrangement of the solar collectors, the enhancement of produced energy may be achieved without additional area needed for the mounting of the photovoltaic collectors. Preferably, the removed position of the photovoltaic collector is a position above and overlying the further photovoltaic collector. Depending on the sizes of thermal solar collector, photovoltaic collector and further photovoltaic collector, amounts of electric energy and heat produced may further be varied according to a user's needs.

According to another aspect of the invention, there is provided an apparatus for use in a solar energy conversion system as described in this application. The apparatus comprises a photovoltaic collector and a mounting installation for removably mounting the photovoltaic collector to a support and relative to a thermal solar collector. The mounting installation is configured to receive the photovoltaic collector in a removed position, where the thermal solar collector is not covered, and in a mounted position, wherein the thermal solar collector is at least partially covered from impinging solar radiation by the photovoltaic collector. The device further comprises a moving mechanism for positioning the photovoltaic collector from the removed position to the mounted position and vice versa, and a control unit for receiving data on any one of ambient conditions and solar thermal collector parameters. Therein the control unit is configured for actuating the moving mechanism if received data on ambient condition exceeds or falls short of a preset ambient parameter or if received data on a solar thermal collector parameter exceeds or falls short of a preset solar thermal collector parameter.

According to an aspect of the apparatus according to the invention, the mounting installation further comprises a hinge for pivotably mounting the photovoltaic collector relative to the thermal solar collector.

According to another aspect of the apparatus according to the invention, the moving mechanism and the mounting installation are configured to move and position the photovoltaic collector to a variety of mounted positions relative to the thermal solar collector. The variety of mounting positions are defined by a variety of rotation angles.

According to a further aspect of the apparatus according to the invention, the photovoltaic collector comprises a reflector arranged on a reverse side of the photovoltaic collector for reflecting solar radiation impinging onto the reverse side of the photovoltaic collector to the thermal solar collector.

Advantages and further aspect of the apparatus have been described relating to the system according to the invention and will not be repeated.

The invention is further described with regard to embodiments, which are illustrated by means of the following schematic drawings, wherein
- Figs. 1a, 1b: show a top view (Fig. 1a) and a side view (Fig. 1b) of an embodiment of a solar energy conversion system in winter with linearly moveable photovoltaic collector;
- Figs. 2a, 2b: show a top view (Fig. 2a) and a side view (Fig. 2b) of the embodiment of the solar system of Fig. 1a,1b in summer;
- Fig. 3a, 3b: show a top view (Fig. 3a) and a side view (Fig. 3b) of an embodiment of a solar energy conversion system in winter with a pivotably mounted photovoltaic collector;
- Figs. 4a, 4b: show a top view (Fig. 4a) and a side view (Fig. 4b) of the embodiment of the solar system of Fig. 3a, 3b in summer;

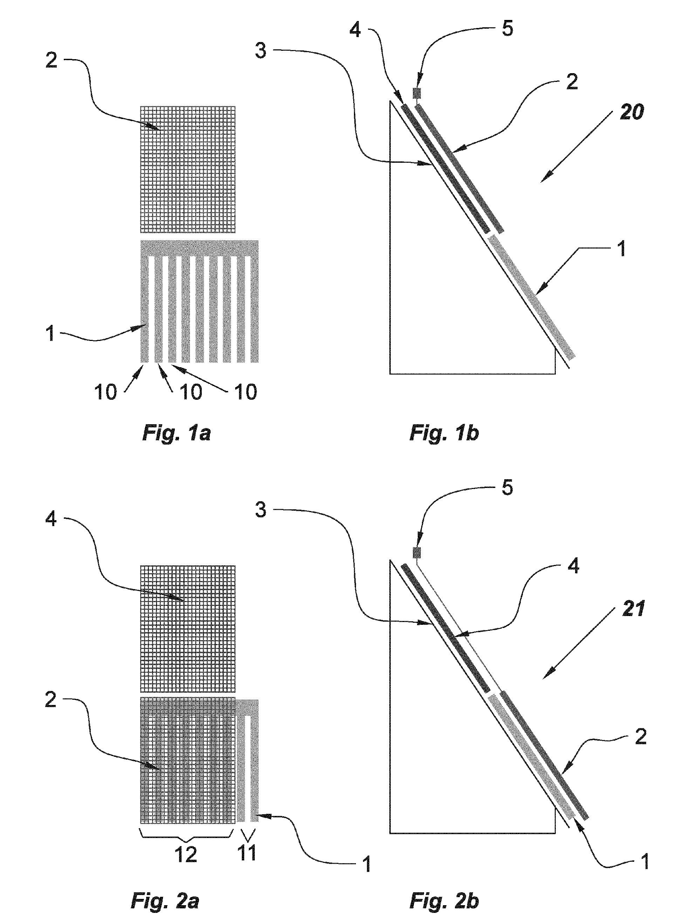

In **Figs. 1a, 1b, 2a and 2b** the solar energy conversion system is installed on a surface 3, for example of a roof of a building or any other support surface provided for installing the solar energy conversion system. A thermal solar collector 1 is arranged below and next to a first photovoltaic collector 4. Thermal solar collector 1 and first photovoltaic collector 4 are preferably permanently mounted on the surface 3 and in a stationary manner. A second photovoltaic collector 2 is mounted via a mounting installation (not shown) on the surface 3 in a linearly movable manner. In Figs. 1a, 1b, the second photovoltaic collector 2 is arranged in a removed position above the first photovoltaic collector 2. The thermal solar collector 1 is entirely uncovered and the entire surface of the thermal solar collector 1 gets a maximum of solar radiation. Figs. 1a, 1b show the operating situation of the system with maximum heat production. Such an operating situation is favorable in winter or in transitional seasons, where heating is required. Electric energy is produced in the second photovoltaic collector 2 but not in the first photovoltaic collector 4, which is entirely covered by the second photovoltaic collector 2.

Via the mounting installation and a moving mechanism, the second photovoltaic collector 2 is linearly moveable into a mounted position, where the second photovoltaic collector 2 is arranged above the thermal solar collector 1 (Fig 2a, 2b). In this embodiment, the sizes of the second photovoltaic collector 2 and of the thermal solar collector 1 are such that the second photovoltaic collector 2 covers only about 70 to 90 percent of the thermal solar collector 1. By this, a minimum amount of heat is still produced in the uncovered portion 11 of the thermal solar collector 1. The covered portion 12 of the thermal solar collector 1 is protected from solar radiation. The area of the covered portion 12 is used for electric energy production in the second photovoltaic collector 2. In addition, the first photovoltaic collector 4 is entirely uncovered and completely available for electric energy production. Figs. 2a, 2b show the operating situation of the system with minimal heat production. Such an operating situation is favorable in summer, where only minimum heating is required.

The mounting installation may be a frame, guiding rails or guiding wheels the second photovoltaic collector 2 may be guided with. A moving mechanism may for example be strings or toothed gears the second photovoltaic collector 2 may be moved and repositioned with. A motor 5 is provided for moving the second photovoltaic collector 2 from the removed position 20 to the mounted position 21 and vice versa. While intermediate positions are feasible, preferably the second photovoltaic collector 2 is either in the removed position 20 or in the mounted position 21.

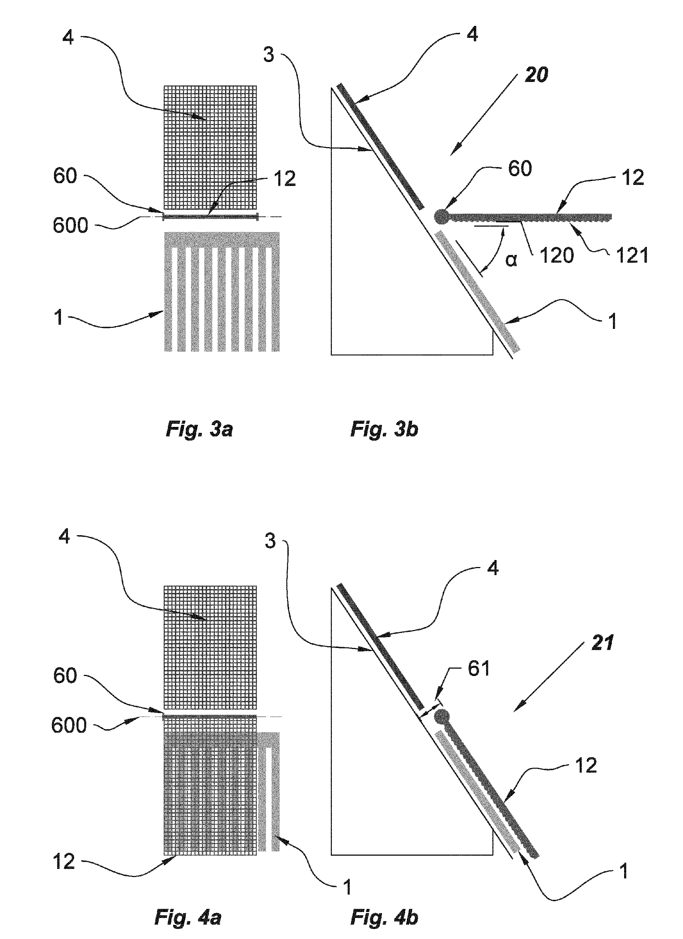

In **Figs. 3a, 3b, 4a and 4b** the same reference numbers are used for the same or similar elements. A thermal solar collector 1 is arranged below and next to a first photovoltaic collector 4. Thermal solar collector 1 and first photovoltaic collector 4 are preferably permanently mounted on the surface 3 and in a stationary manner. A second photovoltaic collector 12 is mounted via a mounting installation (not shown) and a hinge 60 on the surface 3 in a pivotable manner. In Fig. 3a and 3b the second photovoltaic collector 12 is in a removed position 20 at a rotation angle α of about 50 degrees. In this embodiment, the removed position is adapted to a flat incident angle of solar radiation and a rather flat slope of a roof surface 3. This basically corresponds to a winter situation with low positions of the sun. In this situation, the thermal solar collector 1 is entirely uncovered and the entire surface of the thermal solar collector 1 gets a maximum of solar radiation. Electric energy is produced in the first photovoltaic collector 4 and to some extent also in the second photovoltaic collector 12. To maximize heat production, the second photovoltaic collector 12 is provided with a reflector 120 in its reverse or underside 121. The reflector 120 reflects solar radiation impinging onto the reverse side 121, from said reverse side to the thermal solar collector 1 additionally heating the thermal collector 1. Figs. 3a, 3b show the operating situation of the system with maximum heat production and is favorable in winter or in transitional seasons, where heating is required.

By the hinge 60, the second photovoltaic collector 12 is pivotable around the axis 600. If less heat production, more electric energy production, protection of the thermal solar collector or a combination of these measures shall be realized, the second photovoltaic collector 12 may be rotated to a mounted position with a smaller rotation angle α, for example to a rotation angle of α <50 degree. Preferably, the rotation is continuous. However, some mounted positions may also be predefined such that the second photovoltaic collector 12 may be positioned at several distinct predefined mounted positions differing by the size of the angle α. Fig. b shows the system in the mounted position 21 with a rotation angle α=0 degree, where the thermal solar collector 1 is covered by the second photovoltaic collector 12. Also in this embodiment a portion of the thermal solar collector 1 is not covered by the second photovoltaic collector 12 such that some thermal energy may be produced even in the mounted position 21 of the second photovoltaic collector 12.

The second photovoltaic collector 12 is mounted slightly offset 61 from the plane of the thermal solar collector or from the surface 3, respectively. By this, the second photovoltaic collector 12 comes to lie parallel to the thermal solar collector 1 in a closed position with rotation angle α=0 degrees.

Sensors may be provided for measuring system or ambient parameters. For example, an extended second photovoltaic collector 12 may be subject to wind conditions. If forces get too high, preferably the second photovoltaic collector 12 is moved into the closed mounted position 21 as shown in Fig.4b.

Preferably, the collectors according to the invention are panels or a plurality of interconnected panels. The thermal solar collector 1 may be a thermal collector comprising several individual tubes 10 for heat production. Preferably, the thermal solar collector is a flat plate collector or an evacuated tube collector. Photovoltaic collectors 2, 12, 4 preferably comprise crystalline solar cells or thin film solar cells.

The embodiments of the system as shown and describe in the drawings are shown by means of examples only. Further variations may be provided, for example omitting the first photovoltaic collector or changing the number of collectors, thermal as well as photovoltaic collectors.

## Claims

1. Solar energy conversion system, the system comprising a thermal solar collector (1) and a photovoltaic collector (2,12), the system further comprising a mounting installation for removably mounting the photovoltaic collector relative to the thermal solar collector such that in a removed position (20) of the photovoltaic collector (2,12), the thermal solar collector (1) is not covered, and such that in a mounted position (21) of the photovoltaic collector (2,21), the thermal solar collector (1) is at least partially covered from impinging solar radiation by the photovoltaic collector (2,12).

2. System according to claim 1, wherein the thermal solar collector (1) is mounted in a stationary manner and wherein the photovoltaic collector (2,12) is mounted in a movable manner such as for the photovoltaic collector to be relatively moveable against the thermal solar collector.

3. System according to any one of the preceding claims, wherein the photovoltaic collector (2,12) in the mounted position (21) is arranged above the thermal solar collector (1) and covers the thermal solar collector in a range between about 50 percent to 100 percent, preferably in a range between about 70 percent to 100 percent, for example 80 percent.

4. System according to any one of the preceding claims, wherein the mounting installation comprises a guiding device such that the photovoltaic collector (2) is linearly moveable relative to the thermal solar collector (1) along a guiding direction defined by the guiding device.

5. System according to any one of claims 1 to 3, wherein the mounting installation comprises a hinge (60) and the photovoltaic collector (12) is pivotably moveable around an axis (600) of the hinge (60) and pivotably movable relative to the thermal solar collector (1).

6. System according to claim 5, wherein the photovoltaic collector (21) comprises a reflector (120) arranged on a reverse side (121) of the photovoltaic collector for reflecting solar radiation onto the thermal solar collector (1).

7. System according to any one of the preceding claims, further comprising a control unit for detecting any one of ambient conditions and solar thermal collector parameters.

8. System according claim 7, wherein the mounting installation comprises a moving mechanism such as to position the photovoltaic collector (2,12) from the removed position (20) to the mounted position (21) and vice versa, and wherein the control unit is configured for actuating the moving mechanism if a detected ambient condition exceeds or falls short of a preset ambient parameter or if a detected solar thermal collector parameter exceeds or falls short of a preset solar thermal collector parameter.

9. System according to any one of the preceding claims, wherein the thermal solar collector (1), the mounting installation and the photovoltaic collector (2,12) are mounted permanently on a roof.

10. System according to claim 4, further comprising another photovoltaic collector (4) arranged in a sideways manner and next to the thermal solar collector (1), wherein the other photovoltaic collector (4) is not covered when the photovoltaic collector (2) is in the mounted position (21) and wherein the other photovoltaic collector (4) is covered by the photovoltaic collector (2) in the removed position (21) of the photovoltaic collector (2).

11. Apparatus for use in a solar energy conversion system according to any one of claims 1 to 10, the apparatus comprising
a photovoltaic collector (2,12) and
a mounting installation for removably mounting the photovoltaic collector to a support and relative to a thermal solar collector (1), the mounting installation is configured to receive the photovoltaic collector (2,12) in a removed position (20), where the thermal solar collector (1) is not covered, and in a mounted position (21), wherein the thermal solar collector (1) is at least partially covered from impinging solar radiation by the photovoltaic collector (2,12), the device further comprising
a moving mechanism for positioning the photovoltaic collector (2,12) from the removed position (20) to the mounted position (21) and vice versa, and
a control unit for receiving data on any one of ambient conditions and solar thermal collector parameters, wherein
the control unit is configured for actuating the moving mechanism if a detected ambient condition exceeds or falls short of a preset ambient parameter or if a detected solar thermal collector parameter exceeds or falls short of a preset solar thermal collector parameter.

12. Apparatus according to claim 11, wherein the mounting installation further comprises a hinge (60) for pivotably mounting the photovoltaic collector (12) relative to the thermal solar collector (1).

13. Apparatus according to claim 12, wherein the moving mechanism and the mounting installation are configured to move and position the photovoltaic collector (12) to a variety of mounted positions (21) relative to the thermal solar collector (1), the variety of mounting positions being defined by a variety of rotation angles (α).

14. Apparatus according to any one of claims 12 and 13, the photovoltaic collector (12) comprising a reflector (120) arranged on a reverse side (121) of the photovoltaic collector (12) for reflecting solar radiation impinging onto the reverse side of the photovoltaic collector (12) to the thermal solar collector (1).
